# EUROPÄISCHE PATENTSCHRIFT

(11) **EP 2 540 490 B1**
(45) Veröffentlichungstag und Bekanntmachung des Hinweises auf die Patenterteilung: **15.08.2018**
(21) Anmeldenummer: 11171652.8
(22) Anmeldetag: 28.06.2011
(51) Int. Cl.: B32B 5/18, B32B 21/00, E04C 2/00, E04F 13/00

(54) **Verfahren zum Herstellen eines Plattensandwichs**
Method for producing a board sandwich
Procédé destiné à la fabrication d'une plaque sandwich

(43) Veröffentlichungstag der Anmeldung: 02.01.2013
(60) Teilanmeldung: 15199914.1
(73) Patentinhaber: Flooring Technologies Ltd., Kalkara SCM1001 (MT)
(72) Erfinder: Howald, Martin, 6130 Willisau (CH)
(74) Vertreter: Kalkoff & Partner

(56) Entgegenhaltungen:
- EP-A1- 1 681 405
- DE-U1- 20 108 358
- US-A1- 2004 140 151
- DATABASE WPI Week 198808 Thomson Scientific, London, GB; AN 1988-052646 XP002657605, -& JP 63 007901 A (SADASHIGE TOKUSHU GOBAN KOGYO) 13. Januar 1988 (1988-01-13)
- DATABASE WPI Week 200234 Thomson Scientific, London, GB; AN 2002-298669 XP002657606, -& JP 2002 030793 A (EIDAI CO LTD) 31. Januar 2002 (2002-01-31)

## Beschreibung

Die Erfindung betrifft ein Verfahren zum Herstellen eines Plattensandwichs zur Verwendung als Wand-, Decken- oder Fußbodenpaneel mit mindestens den Schritten: Bereitstellen einer Basisplatte aus Holzwerkstoff, Anordnen einer schallisolierenden Schicht oberhalb der Basisplatte, Anordnen einer Deckplatte oberhalb der Basisplatte und Verpressen des Sandwichs. Weiter betrifft die Erfindung ein Plattensandwich gemäß Anspruch 11.

Ein Sandwichelement als Bodenbelag ist bspw. aus der JP 63007901 A bekannt, die Holzfurnierschichten offenbart, die mit einer Mittellage aus geschlossenzelligen Schaum verklebt sind. Die Verwendung von geschlossenzelligen Schaumschichten als Trittschalldämmung ist zudem aus der US 2004/140151 A1 bekannt.

Die JP 2002030793 A offenbart dagegen das Durchtrennen der Oberflächenschichten eines Paneels (Plattensandwichs) in einzelne Oberflächenelemente. Die Oberflächenelemente sind aufgrund der Trennschnitte voneinander entkoppelt, wodurch die Ausbreitung von entstehenden Schallwellen verhindert wird.

Ein gattungsgemäßes Plattensandwich ist zudem beispielsweise aus der WO 03/016655 A1 bekannt. Diese Druckschrift offenbart ein Fußbodenpaneel, das aus einer Basisplatte mit einer schallisolierenden Schicht oberhalb der Basisplatte und einer oberhalb der schallisolierenden Schicht angeordneten Deckplatte besteht. Als schallisolierende Schicht kann eine Korkschicht oder ein Polyurethanschaum verwendet werden.

Nachteilig ist, dass Kork ein ausgesprochen teurer Werkstoff ist und sich insbesondere bei der immer größeren Verbreitung und dem damit verbundenen sinkenden Verkaufspreis solcher Fußbodenpaneele nicht für die industrielle Massenfertigung eignet. Polyurethanschaum wiederum ist günstig, jedoch im Verhältnis zur kalkulierten Lebensdauer von ca. 10-15 Jahren für Paneele nicht dauerhaft elastisch und verliert somit relativ schnell seine schallisolierenden Eigenschaften.

Der Erfindung liegt somit die Aufgabe zugrunde, ein Verfahren zum Herstellen eines Plattensandwiches bereitzustellen, das eine besonders dauerhaft wirkende schallisolierende Schicht aufweist und das besonders kostengünstig ist. Ferner liegt der Erfindung die Aufgabe zugrunde, Plattensandwiches bereitzustellen, die besonders kostengünstig sind und besonders einfach in herkömmliche Herstellungsprozesse von Plattensandwiches und von Paneelen integriert werden können.

Die Aufgabe wird gelöst durch ein Verfahren gemäß Anspruch 1 sowie durch ein Plattensandwich gemäß Anspruch 11. Vorteilhafte Weiterbildungen der Erfindung sind in den abhängigen Ansprüchen angegeben.

Das erfindungsgemäße Verfahren zum Herstellen eines Plattensandwichs zur Verwendung als Wand-, Decken- oder Fußbodenpaneels weist mindestens die Schritte auf:
- Bereitstellen einer Basisplatte aus Spanplatte, OSB-Platte oder MDF,
- Anordnen einer schallisolierenden Schicht oberhalb der Basisplatte, wobei ein elastisches Kunststoffmaterial zum Herstellen der schallisolierenden Schicht eingesetzt wird,
- Anordnen einer Deckplatte aus Spanplatte, OSB-Platte oder MDF oberhalb der Basisplatte,
- Verpressen des Sandwichs, vorzugsweise in einer Presse,
dadurch gekennzeichnet, dass als schallisolierende Schicht ein geschlossenzelliger Schaum angeordnet wird, der vor dem Einbringen in das Plattensandwich einen Druck-E-Modul von 0,25 MPa bis 1,5 MPa und eine Rohdichte zwischen 75 kg/m³ bis 350 kg/m³ aufweist.

Unter dem geschlossenzelligen Schaum ist ein Schaum zu verstehen, der aus einem (polymeren) Matrixmaterial besteht in dem Zellen (im weiteren auch Poren genannt) ausgebildet sind, wobei die Mehrzahl der Zellen des Schaums ein nicht kommunizierendes System bilden. Zwischen den Zellen kann kein Gas auf direktem Weg ausgetauscht werden. Zwischen den einzelnen Zellen kann nur ein geringfügiger und zeitlich langsamer Austausch von in den Zellen eingeschlossenen Medien, beispielsweise Gasen (z.B. Luft) und/oder Feuchtigkeit durch bspw. Diffusion z.B. durch die Zellwand stattfinden.

Ein geschlossenzelliger Schaum verhindert daher beispielsweise zumindest weitestgehend die Feuchtigkeitsaufnahme des Schaums aus der Umgebung oder das Entweichen von im Schaum eingeschlossenen Medien in die Umgebung. Unter Medium/Medien werden alle gasförmig und/ oder flüssig vorliegenden Stoffe oder Stoffgemische verstanden.

Offenzellige Schäume bestehen dagegen überwiegend aus einem Matrixmaterial mit Zellen, die miteinander kommunizieren, d.h. deren Zellwände durchbrochen oder gar nicht vorhanden sind. Offenzellige Schäume grenzen sich insbesondere dadurch von geschlossenzelligen Schäumen ab, dass bei offenzelligen Schäumen zumindest ein Großteil der Zellen mindestens zwei kommunizierende Kanäle zu benachbarten Zellen besitzt, welche z. B. durch Durchbrüche in den Zellwänden gebildet sind.

Von der Erfindung umfasst sind auch Kombinationsschäume, d.h. Schäume, die sowohl offenzellige Bereiche als auch geschlossenzellige Bereiche aufweisen. Hierzu gehören auch Integralschäume, deren Porendichte (d.h. die Anzahl der Poren je Fläche und/oder Volumen) in Z-Richtung der Oberfläche zur Schaummitte zunimmt.

Geschlossenzellige Schäume sind nach Feststellung der Erfinder besonders elastisch und haben nach Belastung eine hohe Rückstellkraft, wodurch in Verbindung mit einer Sandwichplatte eine besonders wirkungsvoll dämpfende schallisolierende Schicht bereitgestellt wird.

Erfindungsgemäß werden geschlossenzellige Schäume verwendet, die vor dem Einbringen in die Sandwichplatte einen Druck-E-Modul von 0,25 MPa bis 1,5 MPa, besonders bevorzugt von 0,35 MPa bis 1,25 MPa und vorteilhaft von 0,5 MPa bis 1,0 MPa aufweisen: Der Druck E-Modul kann vorteilhaft durch das Verpressen gesteigert werden.

Weiter werden erfindungsgemäß geschlossenzellige Schäume verwendet, die eine Rohdichte zwischen 75 kg/m³ bis 350 kg/m³, bevorzugt zwischen 85 kg/m³ und 325kg/m³ und vorteilhaft zwischen 100 kg/m³ bis 300 kg/m³ aufweisen.

Ein weiterer Vorteil von geschlossenzelligen Schäumen ist, dass sie besonders dauerhaft elastisch bleiben und somit auch über die gesamte Lebensdauer eines Paneels ihre Elastizität beibehalten. Ferner sind sie unempfindlich gegenüber den typischen äußeren Einwirkungen, die ein Paneel im Gebrauch oder bei der Herstellung erfährt. Hierzu gehören bei der Herstellung beispielsweise hohe Pressdrücke und/oder hohe Temperaturen bzw. im Gebrauch schwankende Luftfeuchtigkeit, mechanische Belastung, Feuchtigkeit, extreme Wärmeschwankungen durch beispielsweise Fußbodenheizung oder Sonneneinstrahlung.

Der geschlossenzellige Schaum ermöglicht somit in vorteilhafter Weise eine besonders dauerhafte federnde Wirkung der Deckplatte, wodurch über die gesamte Lebensdauer eines Plattensandwichs und darüber hinaus eine bevorzugte schallisolierende Wirkung gegeben ist.

Ein Plattensandwich setzt sich aus aneinander angeordneten und miteinander verbundenen Schichten gleicher oder unterschiedlicher Werkstoff zusammen. Zusätzlich zu der bereits beschriebenen schallisolierenden Schicht besteht das erfindungsgemäße Plattensandwich in seinen weiteren Schichten aus unterschiedlichen Materialen, wie beispielsweise Holz, Holzwerkstoff, Kunststoff, Metall, Polymerstoff oder Kompositwerkstoff die z.B. aus Holzfasern und Kunststoff bestehen. Auch sind Sandwichplatten bekannt, bei denen die einzelnen Schichten vollständig oder zumindest teilweise aus dem gleichen Rohstoff bestehen. So gehören beispielsweise Holzwerkstoffe, deren unterschiedliche Schichten aus bspw. Spanplatte und Faserplatte zusammengesetzt sind, ebenfalls zu den Plattensandwichs. Dagegen werden die klassischen Holzwerkstoffe wie beispielsweise Sperrholzplatten, Furnierholzplatten, Mehrschicht-Spanplatten, Mehrschicht-OSB-Platten oder auch Faserplatten mit unterschiedlichen Dichten über die Stärke der Platte nicht als Sandwichplatte verstanden, weil die einzelnen Schichten aus gleichen Bestandteilen (Späne, Fasern, Furnieren, OSB-Strands) gebildet sind, die ggf. unterschiedliche Abmessungen (grob, fein, dick dünn) aufweisen.

Ein Plattensandwich zeichnet sich dadurch aus, dass es zumindest teilweise aus fertig hergestellten Schichten besteht, die miteinander verbunden werden. Diese Verbindung kann beispielsweise mittels Klebstoff erfolgen, alternativ werden selbstklebende Werkstoffe eingesetzt.

Die Deckplatte des erfinderischen Plattensandwichs besteht aus einer Spanplatte, OSB-Platte, oder einer Faserplatte. Aus der Gruppe der Faserplatten können als Deckplatten beispielsweise leichte MDF-Platten (Rohdichte < 700 kg / m³) oder MDF-Platten (Rohdichte = 700 kg / m³ bis 800 kg / m³), besonders vorteilhaft jedoch hochdichte Deckplatten aus HDF (Rohdichte > als 800 kg / m³) verwendet werden.

Während die Deckplatte als Trägerplatte für eine Oberflächenbeschichtung verstanden werden kann, kann unter der Basisplatte die Trägerplatte des Sandwichs verstanden werden. Die Basisplatte besteht aus einer Spanplatte, OSB-Platte oder Faserplatte.

Unter dem Bereitstellen einer Basisplatte können alle notwendigen bzw. vorteilhaften Maßnahmen verstanden werden, die ein besonders einfaches Anordnen, Herstellen und Weiterverarbeiten der schallisolierenden Schicht ermöglichen. Neben dem eigentlichen Herstellen der Basisplatte kann das Bereitstellen somit beispielsweise auch weitere folgende Maßnahmen -einzeln oder in Kombination- umfassen: Die Behandlung der Basisplatte durch Schleifen, Grundieren, Beschichten mit einer Flüssigkeit oder einem festen Beschichtungsträger oder einem Kleber und/oder lokales Verstärken der Basisplatte beispielsweise mittels flüssiger Verstärkungsmittel.

Auch das Anordnen der Deckplatte ist im Zusammenhang mit dieser Erfindung breit und umfassend zu verstehen. So kann das Anordnen einer Deckplatte ebenfalls weitere Maßnahmen umfassen. Dies können dieselben auch für die Basisplatte aufgelisteten Maßnahmen sein und/oder das Beschichten (z.B. Lackieren, Laminieren oder Kaschieren), das Zuschneiden, Egalisieren, Strukturieren und/oder weitere Maßnahmen. Die Auflistung der Maßnahmen ist weder bei der Basisplatte noch bei der Deckplatte als abschließend zu verstehen.

Bei der Betrachtung des Gesamtaufbaus eines Plattensandwichs ist die Unterseite des Plattensandwichs die Seite, die im Gebrauchszustand einer Raumbegrenzungsfläche, z.B. einer Wand, Decke oder einem Fußboden zugewandt ist. Unter der Oberseite des Sandwichs ist die der Unterseite gegenüberliegende und somit im Gebrauchszustand dem Raum zugewandte Seite des Plattensandwichs zu verstehen. Gleiches gilt für die Unterseiten und Oberseiten der jeweiligen Schichten des Plattensandwichs.

Die Unterseite, wie auch die Oberseite des Plattensandwichs/einer Schicht müssen nicht direkt an eine Raumbegrenzungsfläche /einen Raum angrenzen. Sie können durch weitere Schichten bedeckt sein, die ein direktes Angrenzen an eine Raumbegrenzungsfläche/Raum verhindern.

Der Ausdruck "oberhalb" bezieht sich somit grundsätzlich auf die Ausrichtung des Plattensandwichs/der einzelnen Lagen in der Gebrauchslage, bei der die Unterseite/en zu einer Raumbegrenzungsfläche und die Oberseite/en zu einem Raum ausgerichtet sind.

Eine "oberhalb" einer ersten Schicht angeordnete zweite Schicht muss somit nicht direkt an die erste Schicht angrenzen, sie ist jedoch ausgehend von der Unterseite über der ersten Schicht angeordnet. D.h. ferner, dass eine zweite Schicht, die zu einer ersten Schicht ausgerichtet ist, durch weitere Schichten von der ersten Schicht räumlich getrennt sein kann.

Unter der Oberfläche des Plattensandwichs bzw. der einzelnen Schichten des Plattensandwichs kann sowohl die Unterseite, die Oberseite als auch die Kanten des Plattensandwichs /der einzelnen Schichten verstanden werden.

Das Verpressen des Sandwichs erfolgt vorteilhaft in einer Presse. Hierzu kann beispielsweise eine Kurztaktpresse oder auch eine kontinuierliche Presse verwendet werden. Gegebenenfalls ist es auch möglich, ein Verpressen des Sandwichs mittels Walzen zu erreichen, wenn nur kurzzeitig aufgebrachter Druck zum Herstellen des Plattensandwichs ausreicht. Es ist auch möglich, ein Verpressen der Schichten des Plattensandwichs, durch Stapeln und ggf. Aufbringen von Druck durch Gewichte oder dadurch, dass der Plattenstapel unter Spannung gesetzt wird zu erreichen. Hierbei wird das Abbinden bzw. Verpressen des Plattensandwichs durch das Eigengewicht der jeweiligen Platte unterstützt.

Nach einer Weiterbildung der Erfindung wird der geschlossenzellige Schaum bahnförmig aufgetragen. Der geschlossenzellige Schaum liegt somit vollständig oder zumindest jedoch teilweise im fertig abgebundenen Zustand vor.

Unter bahnförmig wird eine Form des Schaums verstanden, bei der die Dicke des Schaums deutlich geringer ist als die Breite und/oder Länge des Schaums. In diesem Zusammenhang wird unter bahnförmig auch ein Schaum verstanden, der beispielsweise plattenförmig oder als Matte vorliegt.

Der Schaum kann beispielsweise aufgerollt vorliegen und wird während des Herstellungsverfahrens von der Rolle abgerollt und auf der Basisplatte angeordnet. Der bahnförmige Schaum kann beispielsweise abgelegt, aufgewalzt, angedrückt und/oder angepresst werden.

Bevorzugt wird zwischen dem geschlossenzelligen Schaum und der Oberfläche der Basisplatte eine Klebstoffschicht angeordnet. Die Klebstoffschicht ist somit unterhalb des Schaums und oberhalb der Basisplatte angeordnet und kann dementsprechend sowohl auf der Oberfläche der Basisplatte und/oder auf der Oberfläche der der Basisplatte zugewandten Seite des Schaums angeordnet werden.

Besonders bevorzugt wird sowohl oberhalb und/oder unterhalb des Schaums eine Klebstoffschicht angeordnet. Wie bei der unterhalb des Schaums angeordneten Klebstoffschicht beschrieben, kann auch die oberhalb des Schaums angeordnete Klebstoffschicht auf die Oberfläche des Schaums und/oder auf der Oberfläche der Unterseite der Deckplatte angeordnet werden. Die Klebstoffschicht ist in der Regel zwischen 0,05 mm und 0,1 mm stark. Sie entfaltet keine schallisolierende Wirkung.

Besonders bevorzugt wird die unterhalb und/oder oberhalb des Schaums angeordnete Klebstoffschicht als 1-Komponenten-Polyurethan-Kleber, 2-Komponenten-Polyurethan-Kleber, PVAc-Kleber oder als Ethylen-Acetat-Copolymer ausgeführt.

Die Klebstoffschicht kann beispielsweise als Flüssigkeit oder Paste aufgebracht werden.

Sie wird dann beispielsweise aufgesprüht, aufgegossen, aufgerakelt, aufgestrichen oder aufgewalzt. Auch ist es möglich, die Klebstoffschicht als feste Klebstoffschicht, die beispielsweise ebenfalls als Rolle, Platte, Netz oder Matte vorliegt, anzuordnen. Auch in fester Form kann sie mit üblichen Auftragsvorrichtungen, wie beispielsweise mittels Rollen oder Walzen auf den Schaum und/oder auf die Basisplatte/Deckplatte aufgelegt und/oder angepresst werden. Auch ist es möglich, einen beispielsweise aufgerollten Schaum mit bereits auf dem Schaum aufgetragener Klebstoffschicht/en auf einer oder beiden Oberflächen des Schaums zu verwenden.

Der Klebstoff der Klebstoffschicht kann derart ausgestaltetet sein, dass er erst während des Verpressens des Plattensandwichs in der Presse aktiviert wird und die einzelnen Schichten (z. B. Basisplatte, schallisolierende Schicht und Deckplatte) miteinander verklebt. Auch kann beispielsweise bei der Verwendung eines 2-Komponenten-Klebers eine erste Komponente des Klebers auf die Basisplatte und/oder die Deckplatte aufgetragen werden, während eine zweite Komponente auf der Oberfläche des Schaums angeordnet ist. Auch ist es möglich, dass der Schaum als eine Komponente eines 2-Komponeneten-Klebers wirkt.

Gemäß einer Weiterbildung der Erfindung besteht der geschlossenzellige Schaum aus einem Polyolefin oder einem Gemisch aus Polyolefinen. Auch ist es möglich, dass der Hauptbestandteil des geschlossenzelligen Schaums ein Polyolefin oder ein Gemisch aus Polyolefinen ist. Die Verwendung von Polyolefinschäumen in Holzwerkstoffen, Sandwichplatten oder Paneelen ist bisher unbekannt. Insbesondere die herausragende schallisolierende Wirkung eines Polyolefinschaums in Verbindung mit einer Sandwichplatte, die besondere Dauerhaftigkeit eines Polyolefinschaums und die damit besonders vorteilhafte lang anhaltende Wirkung als Schallisolator, selbst bei mehrjähriger Belastung einer Sandwichplatte/eines Paneels sind für den Fachmann überraschend.

Als geschlossenzelliger Schaum verwendbar sind jedoch auch bspw. Schäume auf Basis von Polystyrol, Polypropylen (PP), Polyvinylchlorid (PVC).

Geschlossenzellige Schäume aus Polyolefinen können bei der Verarbeitung, insbesondere bei der Verklebung schwierig sein. Dabei besteht die Gefahr, dass bei einer nicht dauerhaften oder nicht vollständigen Verklebung des Schaums mit der Basisplatte und/oder der Deckplatte Delaminierungseffekte im Sandwich auftreten. Besonders bevorzugt ist der geschlossenzellige Schaum daher koronabehandelt. Koronabehandelte Schäume lassen sich besonders einfach und sicher vollflächig verkleben, so dass insbesondere auch die Verarbeitungszeit besonders kurz ist.

Die schallisolierende Schicht wird besonders bevorzugt auf eine Oberseite der Basisplatte und/oder eine Unterseite der Deckplatte aufgetragen. In jeder Ausführungsvariante ist die schallisolierende Schicht somit oberhalb der Basisplatte angeordnet. Ferner ist eine besonders hohe Flexibilität im Herstellungsprozess gegeben. So kann bspw. abhängig von den vorhandenen Herstellungsvorrichtungen die schallisolierende Schicht auf der Basisplatte angeordnet werden, sie kann aber auch an der Unterseite der Deckplatte angeordnet sein und erst mit dem Auflegen der Deckplatte in das Herstellungsverfahren eingeführt werden. Auch das Auftragen der schallisolierenden Schicht, sowohl auf die Oberseite der Basisplatte, als auch auf die Unterseite der Deckplatte, bspw. als schallisolierende Schicht die aus zwei Lagen gebildet wird, ist möglich.

Gemäß einer Weiterbildung der Erfindung werden zum Herstellen der schallisolierenden Schicht zwischen der Basisplatte und der Deckplatte, in einer Ebene mit der schallisolierenden Schicht, zumindest abschnittsweise ein oder mehrere Abstandshalter angeordnet.

Die Abstandshalter sind dazu ausgelegt, einen gleichmäßigen Abstand zwischen der Basisplatte und der Deckplatte zu gewährleisten. Sie können verhindern, dass die Deckplatte beispielsweise beim Auflegen auf die schallisolierende Schicht in diese einsinkt. Hierdurch kann das Entstehen einer ungleichmäßig dicken schallisolierenden Schicht verhindert werden.

Die Abstandshalter sind derart ausgelegt, dass sie dem Druck der aufliegenden Deckplatte und gegebenenfalls auch dem Pressdruck beim Verpressen des Sandwichs standhalten; sie können gegebenenfalls hohem Pressdrücken widerstehen.

Die Abstandshalter können gleichzeitig, vor oder nach dem Aufbringen der schallisolierenden Schicht oberhalb der Basisplatte angeordnet werden. Sie können bspw. in das elastische Kunststoffmaterial gestellt werden. Auch ist es möglich, die schallisolierende Schicht aus elastischem Kunststoffmaterial um die Abstandshalter herum auf der Basisplatte anzuordnen. Weiter ist es bspw. möglich, die Abstandhalter auf der Einen und/oder Anderen von Basisplatte und Deckplatte und das selbstklebende Kunststoffmaterial auf der Anderen und/ oder der Einen von Basisplatte und Deckplatte anzuordnen.

Die Abstandshalter können aus einem beliebigen Material bestehen. Bspw. ist es möglich, dass die Abstandshalter aus einem Kunststoff, Gummi, Holzwerkstoff, Papier oder Pappe bestehen. Auch die Kombination der Werkstoffe ist denkbar.

Um bspw. das Entstehen von Schallbrücken durch die Abstandshalter zwischen der Basisplatte und der Deckplatte zu verhindern, bestehen die Abstandshalter gemäß einer Weiterbildung der Erfindung zumindest teilweise aus Schmelzkleber.

Schmelzkleber weist den Vorteil auf, dass er bis zu einer bestimmten Temperatur eine ausreichende Härte und Festigkeit aufweist, die einen sicheren und gleichmäßigen Abstand zwischen der Basisplatte und der Deckplatte gewährleistet. Abhängig von der Temperatur, die zum Verpressen des Sandwichs in der Presse verwendet wird, ist es möglich, dass der Schmelzkleber zwischen der Basisplatte und der Deckplatte nur leicht anschmilzt und gegebenenfalls die Platten zusätzlich verbindet.

Besonders bevorzugt wird jedoch der Schmelzkleber bspw. beim Pressvorgang zumindest weitestgehend aufgeschmolzen. In diesem Fall verläuft der Schmelzkleber und es entsteht keine Schallbrücke zwischen der Deckplatte und der Basisplatte. Insbesondere bei der Verwendung von expandierendem Material kann der Schmelzkleber von diesem verdrängt werden und den frei werdenden Raum, den der Abstandshalter aus Schmelzkleber zwischen der Basisplatte und der Deckplatte eingenommen hat, ausfüllen. Hierdurch wird in besonders vorteilhafter Weise das Entstehen von Schallbrücken verhindert und gewährleistet, dass ein gleichmäßiger Abstand zwischen der Basisplatte und der Deckplatte entsteht, der vollständig von der schallisolierenden Schicht ausgefüllt ist.

Die als geschlossenzelliger Schaum angeordnete schallisolierende Schicht weist eine Dicke zwischen 0,1 mm bis 5,0 mm, bevorzugt 0,25 mm bis 3,5 mm, besonders bevorzugt zwischen 0,5 mm bis 2,5 mm, vorteilhaft zwischen 0,75 mm und 2 mm, besonders vorteilhaft zwischen 0.5 mm und 1.0 mm auf.

Die Dicke der schallisolierenden Schicht hat einen entscheidenden Einfluss auf die Wirkung als Schallisolator. Prinzipiell gilt, dass je dicker die schallisolierende Schicht, um so besser die Isolation gegen Schallübertragung, Trittschall oder Reflexion von Raumschall. Der geschlossenzellige Schaum kann dünner als 0,3 mm ausgeführt werden, ohne seine schallisolierende Wirkung zu verlieren.

Die bevorzugten Dickenangaben beziehen sich auf die Gesamtdicke der schallisolierenden Schicht. Die schallisolierende Schicht kann jedoch mehrlagig ausgeführt werden. D. h. der Schaum kann in mehreren dünnen Lagen nacheinander aufgetragen werden, so dass eine schallisolierende Schicht gebildet wird. Bei dem geschlossenzelligen Schaum ist es daher möglich, zwischen den mehreren dünnen Lagen jeweils eine Klebstoffschicht anzuordnen, der die einzelnen Schaumlagen miteinander zu einer geschlossenzelligen Schaumschicht verklebt.

Besonders bevorzugt wird ein Plattensandwich mit mehreren schallisolierenden Schichten. Diese sind durch weitere - schallisolierende Schichten und/oder nicht schallisolierende Schichten- voneinander getrennt im Plattensandwich angeordnet. Beispielsweise kann oberhalb einer ersten schallisolierenden Schicht eine Schicht aus Gewebe, Papier oder Holzwerkstoff angeordnet werden, auf der oberhalb eine zweite schallisolierende Schicht angeordnet ist, die wiederum an eine Deckplatte angrenzt. Bei der Verwendung von mehreren schallisolierenden Schichten in einem Plattensandwich können beispielsweise auch Schichten aus selbstklebendem Kunststoffmaterial und geschlossenzelligen Schaum kombiniert werden. Anzumerken ist noch, dass jede schallisolierende Schicht wiederum aus mehreren Lagen bestehen kann.

Eine bevorzugte Ausführung der Erfindung betrifft die weitere Verarbeitung des Plattentsandwiches zu einem schallisolierenden Paneel, insbesondere zur Verwendung als Wand-, Decken- oder Fußbodenpaneel. Ein Plattensandwich, hergestellt gemäß Anspruch 1, wird mit einer Oberflächenbeschichtung versehen, z. B. durch ein Verfahren mit mindestens den Schritten:
- Bereitstellen des Plattensandwichs,
- Auftragen der Oberflächenbeschichtung auf die Deckplatte des Plattensandwichs,
- Aushärten der Oberflächenbeschichtung und
- Herstellen eines nicht lösbaren Verbundes zwischen der Oberflächenbeschichtung und der Deckplatte des Plattensandwichs.

Unter dem Bereitstellen des Plattensandwichs werden alle notwendigen, üblichen und/oder vorteilhaften Maßnahmen zur Vorbereitung auf die Beschichtung des Plattensandwichs verstanden. Diese umfassen insbesondere alle Maßnahmen, die bereits weiter oben beim Bereitstellen der Basisplatte, und/oder Deckplatte benannt sind.

Mit dem Aushärten der Oberflächenbeschichtung wird ein nicht lösbarer Verbund zwisehen der Oberflächenbeschichtung und der Deckplatte des Plattensandwichs erstellt. Nicht lösbar heißt in diesem Zusammenhang, dass die Oberflächenbeschichtung nicht zerstörungsfrei von der Oberfläche der Deckplatte abgelöst werden kann.

Aufgrund der erfindungsgemäßen Struktur des Plattensandwichs kann dieses mit allen üblichen Oberflächenbeschichtungen und in allen üblichen Verfahren zum Oberflächenbeschichten beschichtet werden. So ist es beispielsweise möglich, feste oder vorgefertigte Oberflächenbeschichtungen, die plattenförmig, bahnförmig oder in Form einer Matte vorliegen, auf die Deckplatte aufzutragen und mit dieser zu Verpressen. Hierbei können übliche Pressparameter wie bspw. Temperaturen von 160°C bis 230°C, Pressdrücke von 30 kg/cm² bis 60 kg/cm² und Presszeiten von 8 sec bis 30 sec, für die DPL-Beschichtung- verwendet werden, ohne die schallisolierende Schicht negativ, d.h. in ihrer Wirkweise verschlechternd, zu beeinflussen. Besonders bevorzugt wird das Plattensandwich im DPL-Verfahren (Direct Pressure Laminate) beschichtet.

Auch können flüssige Oberflächenbeschichtungen beispielsweise durch Walzen, Sprühen oder Rakeln ggf. auch durch Aufstreichen und/oder mittels Digitaldruck auf die Deckplatte des Plattensandwichs aufgetragen werden. Auch flüssige Beschichtungsmittel können mittels üblicher Verfahren und insbesondere mit üblichen Trocknungsmethoden (bspw. Wärme oder Strahlung) verarbeitet werden, ohne die schallisolierende Schicht negativ zu beeinflussen.

In einer besonderen Ausführungsform des Plattensandwichs ist es möglich, beim Herstellen des Plattensandwichs bereits eine Deckplatte mit mindestens teilweise fertig gestellter oder vorbereiteter Oberflächenbeschichtung zu verwenden. Insbesondere bevorzugt wird eine Deckplatte im PDL-Verfahren (Printed Decor Laminate) oberflächenbeschichtet und anschließend mit der schallisolierenden Schicht und der Basisplatte verklebt. Das Verkleben (Verpressen) kann aufgrund des Eigengewichts der Platten oder durch beispielsweise das Zuführen von Wärme, Strahlung oder Druck erfolgen. Auch eine Kombination aus beispielsweise Wärme und Druck oder Strahlung und Druck kann zum Aushärten der Klebstoffschichten und/oder Schichten der Oberflächenbeschichtung und/oder der schallisolierenden Schicht verwendet werden.

Die Oberflächenbeschichtung kann aus mehreren Schichten bestehen. Die Schichten wiederum können aus mehreren Lagen bestehen. So ist es beispielsweise möglich, zusätzliche schallmindernde Schichten, beispielsweise besonders weiche Schichten aus Lacken oder Folien mit geringen Shore-Härten in den Oberflächenaufbau zu integrieren. Auch können beispielsweise einzelne besonders verschleißfeste Schichten oder Lagen, die z. B. mit verschleißfesten Partikeln (insbesondere Korund) ausgestattet sind, in die Oberflächenbeschichtung integriert werden.

Besonders bevorzugt werden mindestens eine Dekorschicht und mindestens eine Verschleißschicht aufgetragen. Es können jedoch auch mehrere Dekorschichten und/oder Verschleißschichten aufgetragen werden.

Als Dekorschicht können alle bekannten Beschichtungen verwendet werden, beispielsweise Dekorpapiere oder -folien, Farben oder Lackschichten. Die Dekorschicht kann wie bereits erwähnt, aus zahlreichen einzelnen Lagen von Feststoffen (z. B. Dekorpapier oder -folie) oder von Flüssigkeiten bzw. Pasten (z. B. Farben oder Lackschichten) gebildet werden, die nacheinander und/oder gleichzeitig zumindest abschnittsweise aufgetragen werden und beispielsweise auch zumindest teilweise zwischen dem einzelnen Auftrag der Lagen und/oder dem einzelnen Auftrag der unterschiedlichen Schichten angeliert werden. Auch ein Nass-in-Nass-Auftrag von flüssigen oder pastösen Schichten oder Lagen ist möglich für die Werkstoffe, die auszuhärten sind, bevor sie gebrauchstüchtig sind wie z. B. strahlungshärtende Lacke oder UV-härtende Lacke.

Die Dekorschichten können einfarbig oder mehrfarbig ausgestaltet sein. So ist es beispielsweise möglich, als Dekorschicht Farbschichten, Schichten mit Pigmenten oder auch eingefärbte Lacke oder Kunstharze zu verwenden. Besonders bevorzugt wird die Dekorschicht im PDL-Verfahren auf das Plattensandwich aufgetragen.

Die Verschleißschicht der Oberflächenbeschichtung kann ebenso wie die Dekorschicht sehr unterschiedlich ausgeführt sein. Üblich sind unter Druck und Temperatur aushärtende Kunstharze wie Melaminharz oder Phenolharz oder strahlungshärtende oder UV-härtende Lacke. Es können auch mehrere Verschleißschichten aufgetragen werden. Die Verschleißschichten können, wie die Dekorschichten aus mehreren Lagen bestehen. Dabei kann es sich um unterschiedliche Lagen und/oder Schichten mit gleichen oder unterschiedlichen Funktionen und/oder Bestandteilen handeln. Die Schichten und/oder Lagen können gegebenenfalls in unterschiedlichen Verfahrensschritten und/oder mittels unterschiedlicher Methoden aufgetragen werden. Bevorzugt werden korundhaltige Schichten in die Oberflächenbeschichtung oder einzelne korundhaltige Lagen in die Verschleißschicht integriert, um eine besonders hohe Abriebfestigkeit oder Kratzfestigkeit zu erreichen.

Besonders bevorzugt werden die mindestens eine Dekorschicht und/oder die mindestens eine Verschleißschicht flüssig aufgetragen. Der Auftrag kann beispielsweise durch Aufsprühen oder Aufwalzen erfolgen. Auch ist es möglich, die Dekorschicht und/oder die Verschleißschicht beispielsweise aufzurakeln, aufzustreichen und/oder aufzudrucken (bspw. mittels Digitaldruck). Im Zusammenhang mit der Dekorschicht und der Verschleißschicht wird unter flüssigem Auftragen auch das Auftragen von pastösen oder hochviskosen Schichten verstanden.

Auch ist es möglich, Strukturen in die Dekorschicht und/oder die Verschleißschicht einzubringen bzw. strukturbildende Lagen oder Schichten in die Oberflächenbeschichtung zu integrieren. Hier ist es insbesondere möglich, die Oberflächenbeschichtung nach dem Auftragen gegebenenfalls vor dem abschließenden Aushärten oder nach dem Aushärten zu prägen oder Lagen oder Schichten in die Oberflächenbeschichtung zu integrieren, die die gleichmäßige Verteilung einzelner Schichten und/oder Lagen beeinflussen, so dass bspw. eine Porenstruktur in der Oberflächenbeschichtung entsteht, die Holz nachgebildet ist.

Nach einer Weiterbildung der Erfindung wird die Dekorschicht als bedruckter Dekorträger, insbesondere als bedrucktes Dekorpapier oder als bedruckte Dekorfolie aufgetragen.

Auch als Verschleißschicht können beispielsweise mit Kunstharz getränkte, insbesondere melaninharzgetränkte Trägerpapiere, sogenannten Overlays verwendet werden. Auch ist es möglich, ein flüssiges Overlay, d. h. ein Kunstharz mit beispielsweise Zellulosefasern als Verschleißschicht auf die Dekorschicht aufzutragen.

Aufgrund der erfindungsgemäßen Struktur kann das fertig beschichte Plattensandwich in allen üblichen Paneelherstellungsverfahren weiter bearbeitet werden. Hierzu gehören zusätzlich zu den beschriebenen Beschichtungsverfahren, insbesondere auch Verfahren zum Anbringen von Profilen an den Seitenkanten.

Besonders bevorzugt wird das Sandwich, bestehend aus mindestens dem Plattensandwich und der Oberflächenbeschichtung zum Aushärten und Verbinden in einer Presse verpresst. Insbesondere bei der Verwendung von Dekorträgern und Overlays erfolgt die Aushärtung in einer Presse unter Unterwirkung von Druck und Wärme. Hierzu können die üblichen Pressparameter für das Verpressen von Oberflächenbeschichten mit Holzwerkstoffplatten verwendet werden. Als Presse sind alle üblichen Pressen verwendbar, bevorzugt werden jedoch Kurztaktpressen verwendet.

Weiter wird die Aufgabe gelöst durch ein Plattensandwich nach Anspruch 11 sowie dessen Verwendung als Wand-, Decken- oder Fußbodenpaneel nach Anspruch 12.

Das erfindungsgemäße Plattensandwich, z. B. zur Verwendung als Trägerplatte für Paneele, weist eine Basisplatte aus Spanplatte, OSB-Platte oder MDF, eine schallisolierende Schicht und eine Deckplatte auf, die zum Beschichten mit einer Oberflächenbeschichtung geeignet ist, und ist dadurch gekennzeichnet, dass ein elastisches Kunststoffmaterial als schallisolierende Schicht angeordnet ist, wobei das elastische Kunststoffmaterial aus einem geschlossenzelligen Schaum besteht, der vor dem Einbringen in das Plattensandwich einen Druck-E-Modul von 0,25 MPa bis 1,5 MPa und eine Rohdichte zwischen 75 kg/m³ bis 350 kg/m³ aufweist.

Aufgrund des bereits im Herstellungsverfahren beschriebenen besonderen strukturellen Aufbaus des erfindungsgemäßen Plattensandwichs kann dieses sowohl Trittschall als auch Raumschall absorbieren. Der strukturelle Aufbau des Plattensandwichs verhindert in vorteilhafter Weise die Weiterleitung von Schallenergie innerhalb des Sandwichs. Die Schallenergie, die beispielsweise in der Deckplatte des Plattensandwichs besteht, dringt durch die Deckplatte hindurch in die schallisolierende Schicht ein. In dieser verläuft sich die Schallenergie besonders vorteilhaft und wird nicht bzw. nur teilweise weiter in die Basisplatte übertragen.

Besonders bevorzugt kann das Plattensandwich eine weitere Trittschalldämmung aufweisen, die unterhalb der Basisplatte, d. h. an der, der Deckplatte gegenüberliegenden Seite der Basisplatte angeordnet ist. In Kombination mit dem erfindungsgemäßen Plattensandwich und der in diesem vorhandenen schallisolierenden Schicht findet eine annähernd vollständige Absorption von Schallenergie statt, so dass Schallenergie nicht auf eine Raumbegrenzungsfläche (wie beispielsweise eine Decke, Fußboden und/oder eine Wand) übertragen wird.

Insbesondere vermindert das erfindungsgemäße Plattensandwich somit die Übertragung von Trittschall, der beim Begehen eines Plattensandwichs entsteht und auf dem angrenzenden Fußboden übertragen wird.

Schallenergie wird besonders gut von harten Oberflächen reflektiert. Neben der bereits beschriebenen Verminderung von Trittschall verringert das erfindungsgemäße Plattensandwich auch Raumschall, d.h., Schall, der beim Begehen des Fußbodens im Raum entsteht und der im Raum hörbar ist. Das erfindungsgemäße Plattensandwich ermöglicht, dass die Deckplatte durch die schallisolierende Schicht federnd gelagert ist, so dass die Reflexion von Schallenergie zurück in den Raum, vermindert wird. Hierzu gehört auch der Abbau von Schallenergie, die die Deckplatte in Schwingung versetzt.

Besonders bevorzugt wird das oberflächenbeschichtete Plattensandwich als Paneel eingesetzt. Paneele zeichnen sich dadurch aus, dass sie zum Einen eine mindestens einseitige Oberflächenbeschichtung aufweisen und zum Anderen eine Profilierung der Seitenkanten zum Verbinden mit anderen Paneelen besitzen. Als Profile können einfach Nut-Feder-Profile verwendet werden. Bevorzugt werden jedoch Klick-, Schwenk- oder Druckknopfprofile verwendet, die ein besonders einfaches Verlegen der Paneele zu einer Fläche ermöglichen. Beim Anbringen der Profilierungen (z.B. durch Fräsen) wird der Schaum ebenfalls angeschnitten. Der geschlossenzellige Schaum verhindert jedoch weiterhin, in vorteilhafterweise, das Entweichen/ Eindringen von Medien in den Schaum bzw. aus dem Schaum heraus, so dass seine schallisolierende Wirkung auch nach dem Anfräsen der Profile vollständig erhalten bleibt.

Paneele (wie auch oberflächenbeschichtete Plattensandwichs) können zusätzlich zu der Oberflächenbeschichtung auf einer Oberseite einen Gegenzug auf der der Oberseite gegenüberliegenden Unterseite aufweisen, beispielsweise bestehend aus einem zellulosebasierten Trägermaterial (z.B. ein Trägerpapier) mit Kunstharztränkung.

Ferner können sowohl oberflächenbeschichtete Plattensandwichs als auch Paneele beispielsweise auf der Vorderseite oder auf der Rückseite weitere Funktionsschichten besitzen. Besonders vorteilhaft ist hier die bereits erwähnte zusätzliche Trittschalldämmung auf der Unterseite, die beispielsweise als weiche und ggf. elastische Schicht auf der Unterseite des Plattensandwichs /Paneels angeordnet ist. Eine Trittschalldämmung kann beispielsweise entweder nachträglich mit dem Paneel/ Plattensandwichs oder während oder vor der Herstellung des Plattensandwichs mit der Basisplatte verbunden werden. Es können alle üblichen Trittschalldämmungen wie bspw. Kork, Kunststoffschäume oder besonders leichte Faserplatten aus Natur- und/oder Kunstfasern verwendet werden.

Im Folgenden werden Ausführungsbeispiele der Erfindung anhand von Figuren näher erläutert. Es zeigt
- Fig. 1:: eine schematische Explosionsdarstellung einer Ausführungsform eines erfinderischen Plattensandwichs;
- Fig. 2:: eine schematische Explosionsdarstellung einer nicht zur Erfindung gehörenden Ausführungsform eines Plattensandwichs;
- Fig. 3:: eine schematische Darstellung eines Ablaufs eines Herstellungsverfahrens für eine Ausführungsform eines erfinderischen Plattensandwichs;
- Fig. 4:: eine schematische Darstellung eines Ablaufs eines Beschichtungsverfahrens für eine Ausführungsform eines erfinderischen Plattensandwichs.

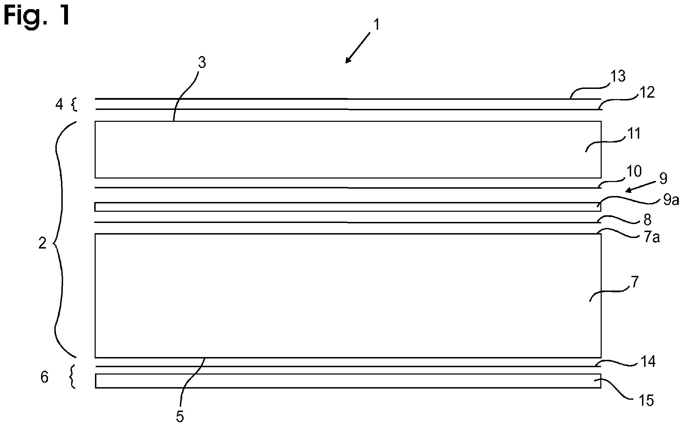

Figur 1 zeigt ein Panel 1 mit einem erfindungsgemäßen Plattensandwich 2 gemäß der ersten Alternative der Erfindung. Das Panel 1 weist eine auf der Oberseite 3 des Plattensandwichs 2 angeordnete Oberflächenbeschichtung 4 und eine auf der Unterseite 5 des Plattensandwichs 2 angeordnete Unterseitenbeschichtung 6 auf.

Das in Figur 1 dargestellte Plattensandwich 2 besteht aus einer Basisplatte 7, die als Trägerplatte für das Panel 1 ausgelegt ist. Die Basisplatte 7 besteht aus einer leichten MDF-Platte mit einem Rohgewicht von ca. 650 kg / m³. Die Basisplatte 7 weist lokale Verstärkungen (hier nicht dargestellt) im Bereich der später anzuordnenden Profilkanten (hier nicht dargestellt) auf. Alternativ zur leichten MDF-Platte kann bspw. auch eine MDF-Platte, eine HDF-Platte oder eine Sperrholzplatte verwendet werden.

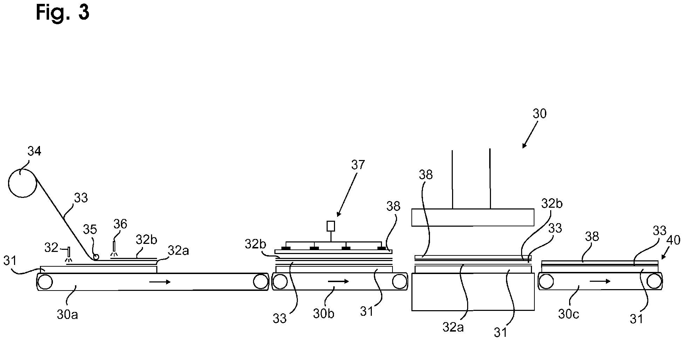

Auf einer Oberseite 7a der Basisplatte 7 ist eine erste Klebstoffschicht 8 angeordnet. Diese erste Klebstoffschicht 8 besteht aus einem flüssig aufgetragenen 2-Komponenten-Polyurethan-Kleber. Die erste Klebstoffschicht 8 wurde mittels Sprühvorrichtung (siehe Figur 3) gleichmäßig dünn in einer Schichtstärke von 0,08 mm über die gesamte Oberfläche der Basisplatte 7 aufgesprüht.

Oberhalb der ersten Basisplatte 7 mit der Klebstoffschicht 8 ist eine schallisolierende Schicht 9 angeordnet. Die schallisolierende Schicht 9 besteht aus einem geschlossenzelligen Schaum 9a, hier ein Polyolefinschaum, mit einer Dicke von ca. 0,7 mm.

Oberhalb der schallisolierenden Schicht 9, d. h. auf der Oberfläche der schallisolierenden Schicht 9, die einer Deckplatte 11 zugewandt ist, ist eine zweite Klebstoffschicht 10 angeordnet, die wie die erste Klebstoffschicht 8 aus einem 2-Komponenten-Polyurethan-Kleber besteht und flüssig mittels Sprühvorrichtung (siehe Figur 3) auf die schallisolierende Schicht 9 aufgesprüht ist.

Der Polyolefinschaum ist beidseitig koronabehandelt, um eine besonders gute Haftung der Klebstoffschichten 8, 10 auf dem Polyolefinschaum zu ermöglichen. Delaminierungen zwischen Polyolefinschaum und Basisplatte 7 oder Polyolefinschaum und Deckplatte 11 werden so besonders vorteilhaft langfristig verhindert.

Weiter ist die Deckplatte 11 dargestellt, die auf die zweite Klebstoffschicht 10 aufgelegt und somit oberhalb der schallisolierenden Schicht 9 angeordnet ist. Die Deckplatte besteht aus einer HDF-Platte und weist eine Rohdichte von ca. 850 kg/m³ auf.

Das in Figur 1 dargestellte Plattensandwich 2 einschließlich der Klebstoffschichten 8, 10 weist eine Gesamtstärke von ca. 9,6 mm auf. Die Deckplatte 11 ist ca. 2,5 mm stark, die Basisplatte 7 ca. 6,4 mm und die schallisolierende Schicht 9 wie bereits erwähnt ca. 0,7 mm.

Die in Figur 1 dargestellte Oberflächenbeschichtung 4 besteht aus einer Dekorschicht 12, hier aus einem mit Melaminharz getränkten Dekorpapier, und aus einer oberhalb der Dekorschicht 12 angeordneten Verschleißschicht 13, hier aus einem Overlaypapier. Das Overlaypapier ist wie das Dekorpapier mit Melaminharz getränkt.

Die Unterseitenbeschichtung 6 des dargestellten Plattensandwichs 2 besteht aus einem Gegenzug 14, hier aus einem mit Melaminharz getränkten Trägerpapier und einer Trittschalldämmung 15, hier aus einem geschlossenzelligen Schaum, der eine Dicke von 2 mm aufweist. Die Trittschalldämmung 15 ist auf den Gegenzug aufgeklebt.

Gegenüber einem Paneel ohne schallisolierende Schicht 9 jedoch mit einer 3 mm dicken PE-Trittschalldämmung (Vergleichspaneel) weist das in Figur gezeigte Paneel ein Raumschallverbesserungsmaß gemessen nach IHD W431/DIN45631 von ca. 44% auf.

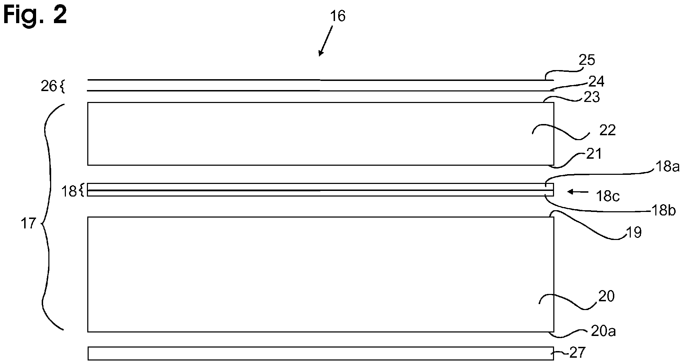

Fig. 2 zeigt ein Paneel 16 mit einem Plattensandwich 17. Als schallisolierende Schicht 18 ist ein nicht zur Erfindung gehörendes selbstklebendes Kunststoffmaterial 18c zwischen einer Oberseite 19 einer Basisplatte 20 und einer Unterseite 21 einer Deckplatte 22 angeordnet. Die Basisplatte 20 besteht aus einem Holzwerkstoff, hier einer MDF-Platte, mit einem Rohgewicht von ca. 780 kg/m³ und einer Stärke von ca. 12 mm. Die Deckplatte 22 besteht aus einer HDF-Platte mit ca. 850 kg/m³ Rohgewicht und einer Stärke von ca. 4 mm.

Die schallisolierende Schicht 18 wurde in zwei Lagen aufgesprüht. Die erste Lage 18a wurde als flüssiges selbstklebendes Kunststoffmaterial 18c auf die Oberseite 19 der Basisplatte 20 aufgesprüht. Die zweite Lage 18b wurde durch Aufsprühen des gleichen selbstklebenden Kunststoffmaterials 18c auf die Unterseite der Trägerplatte 22 erzeugt. Beide Lagen 18a, 18b weisen eine Stärke von je ca. 1,6 mm auf. Beide Lagen 18a, 18b bilden gemeinsam die schallisolierende Schicht 18 die somit eine Stärke von ca. 3,2 mm aufweist. Beide Lagen 18a, 18b des selbstklebenden Kunststoffmaterials 18c sind beim Aufsprühen besonders hoch viskos eingestellt, um ein Verlaufen nach dem Aufsprühen zu vermeiden. Die beiden Lagen 18a, 18b können alternativ beide aufeinander auf die Oberseite 19 oder die Unterseite 21 aufgesprüht werden.

Zusätzlich zur schallisolierenden Funktion verklebt die schallisolierende Schicht 18 die Basisplatte 20 mit der Deckplatte 22. Die schallaktive Schicht 18 besteht aus einem thermoplastischen, reaktiven PU-Material. Alternativ hierzu könnte bspw. auch ein reaktiver Schmelzkleber verwendet werden, der sich beim Abkühlen verfestigt und dauerhaft vernetzt.

Die Deckplatte 22 weist auf ihrer Oberseite 23 eine Oberflächenbeschichtung 26 bestehend aus einer Dekorschicht 24 und einer auf der Dekorschicht 24 angeordnete Verschleißschicht 25 auf. Die Dekorschicht 24 besteht aus einem mehrlagigen Farb-/Lackauftrag, der ein Holzdekor darstellt. Alternativ kann beispielsweise auch ein einfarbiges Dekor, ein Fliesendekor oder jegliches Bild durch das Dekor dargestellt werden. Die Dekorschicht 24 wurde mittels Walzen flüssig aufgetragen. Die Dekorschicht 24 kann alternativ beispielsweise aufgesprüht werden.

Die Verschleißschicht 25 besteht aus einem besonders verschleißfesten mehrlagig aufgetragenen Oberflächenlack, der transparent ist und Hartstoff-Partikel (hier nicht dargestellt) zur Steigerung der Abriebfestigkeit und Kratzfestigkeit enthält. Alternativ ist es auch möglich, beispielsweise eine Kunstharzbeschichtung als flüssiges oder festes Overlay anzuordnen.

Auf der der Oberflächenbeschichtung 26 gegenüberliegenden Unterseite 20a des Plattensandwichs 17 ist eine Trittschalldämmung 27 aufgeklebt. Die Trittschalldämmung 27 besteht aus einem offenzelligen Polyurethanschaum. Alternativ könnte bspw. auch eine Holzfaserplatte, Kork oder ein geschlossenzelliger Polyolefinschaum verwendet werden.

Die hier dargestellte zweite Ausführungsform der Erfindung bietet ein Dämmverhalten für Schall, dass dem Plattensandwich gemäß Figur 1 vergleichbar ist.

Fig. 3 zeigt schematisch den Ablauf eines Herstellungsverfahrens für ein Plattensandwich. Es wird eine mehrteilige Pressenzu/abführungs-Vorrichtung 30a, 30b, 30c und eine Kurztaktpresse 30 gezeigt.

Bei dem Herstellungsverfahren wird eine erste MDF-Platte, die als Basisplatte 31 fungiert, mittels einer ersten Sprühvorrichtung 32 auf der Oberseite mit einer ersten Klebstoffschicht 32a aus PVAC-Kleber besprüht. Auf der Klebstoffschicht 32a wird ein geschlossenzelliger Polyolefinschaum 33 angeordnet. Der geschlossenzellige Polyolefinschaum 33 ist 3,5 mm stark und wird über eine Abrollvorrichtung 34 und eine erste Anpressrolle 35 auf der ersten Klebstoffschicht 32a fixiert. Über eine zweite Sprühvorrichtung 36 wird die Oberfläche des Polyolefinschaums 33, die der Basisplatte 31 gegenüberliegt, mit einer zweiten Klebstoffschicht 32b aus einem PVAC-Kleber eingesprüht. Beide Oberflächen des Polyolefinschaums sind koronabehandelt.

Im weiteren Verlauf des Plattensandwich-Herstellungsverfahrens wird auf die zweite Klebstoffschicht 32b über eine Vakuumhubvorrichtung 37 eine Deckplatte 38 aufgelegt. Die Deckplatte 38 besteht aus einer 5 mm starken HDF-Platte. Die dargestellte Deckplatte 38 weist keine Oberflächenbeschichtung auf. Alternativ ist es bspw. möglich eine bereits oberflächenbeschichtete, insbesondere im PDL-Verfahren lackierte Deckplatte 38 zu verwenden.

Das derart vorbereitete Plattensandwich wird über die Zuführungsvorrichtung 30a, 30b in die Kurztaktpresse 30 eingefahren. In der Kurztaktpresse 30 wird dem vorbereiteten Plattensandwich Wärme zugeführt, es wird Druck über den oberen Pressenstempel auf das Sandwich ausgeführt und das Sandwich wird verpresst. Bei der Verwendung einer bereits oberflächenbeschichtenen Deckplatte können die Pressparameter Temperatur, Druck und/oder Wärme besonders niedrig eingestellt werden, so dass die Oberflächenbeschichtung durch den Pressvorgang nicht beschädigt wird.

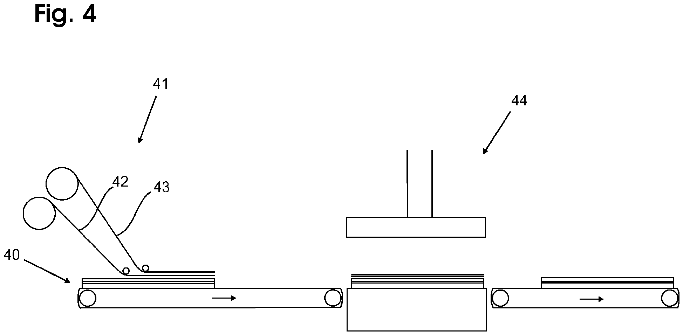

Nach dem Pressen fährt das fertig verpresste Plattensandwich 40 aus der Kurztaktpresse heraus und kann beispielsweise entsprechend dem in Fig. 4 dargestellten Beschichtungsverfahren zu einem Paneel weiter verarbeitet werden.

Fig. 4 zeigt schematisch einen Ablauf eines Beschichtungsverfahrens für ein Paneel. Das fertig gestellte Plattensandwich 40 aus Figur 3 wird in einer Beschichtungsvorrichtung 41 oberflächenbeschichtet. Die Oberflächenbeschichtung besteht aus einem Dekorpapier 42 und einem Overlay 43, welche nacheinander auf das Plattensandwich 40 aufgelegt werden. Das Dekorpapier 42 besteht aus einem bedruckten Papierträger, das Overlay 43 aus einem Overlaypapier. Beide Papiere sind mit einem Kunstharz getränkt.

Im Anschluss an das Auflegen der Oberflächenbeschichtung wird das Plattensandwich 40 mit dem aufgelegten Dekorpapier 42 und dem oberhalb des Dekorpapiers 42 angeordneten Overlay 43 in eine Kurztaktpresse 44 überführt. In der Kurztaktpresse 44 wird die Oberflächenbeschichtung mit dem Plattensandwich 40 verpresst. Der erfindungsgemäße geschlossenzellige Schaum, wie ggf. auch das erfindungsgemäße selbstklebende Kunststoffmaterial, ermöglichen die Durchführung eines in Pressdruck und Pressdauer üblichen Kurztaktpressenvorganges, wie er für Overlaypapier und Dekorpapier angewendet wird. Nach dem Pressen wird das fertig verpresste Paneel aus der Kurztaktpresse herausgefahren und kann entsprechend seiner weiteren Verwendung bearbeitet, insbesondere zerschnitten und profiliert werden.

Die in Figur 3 und in Figur 4 dargestellten Verfahrensabläufe können getrennt voneinander oder direkt hintereinander angeordnet sein. Auch ist es möglich nach dem Auflegen der Deckplatte 38 mit der Vakuumhubvorrichtung 37 (siehe Figur 3) direkt und somit ohne Verpressen eine Oberflächenbeschichtung bspw. wie in Figur 4 dargestellt, durchzuführen, z.B. durch Lackieren. Das Verpressen der Basisplatte mit der schallisolierenden Schicht und der Deckplatte erfolgt in diesem Fall gemeinsam mit dem Verpressen der Oberflächenbeschichtung (siehe Figur 4) in einer Presse 44.

## Patentansprüche

1. Verfahren zum Herstellen eines Plattensandwichs (2, 17, 40) zur Verwendung als Wand-, Decken- oder Fußbodenpaneel (1, 16) mit mindestens den Schritten:
- Bereitstellen einer Basisplatte (7, 20, 31) aus Spanplatte, OSB-Platte oder Faserplatte,
- Anordnen einer schallisolierenden Schicht (9, 18) oberhalb der Basisplatte (7, 20, 31), wobei ein elastisches Kunststoffmaterial zum Herstellen der schallisolierenden Schicht (9, 18) eingesetzt wird,
- Anordnen einer Deckplatte (11, 22, 38) aus Spanplatte, OSB-Platte oder Faserplatte oberhalb der Basisplatte (7, 20, 31),
- Verpressen des Sandwichs, vorzugsweise in einer Presse,
**dadurch gekennzeichnet, dass**
- als elastisches Kunststoffmaterial ein geschlossenzelliger Schaum (9a) angeordnet wird,
- der vor dem Einbringen in das Plattensandwich (2, 17, 40) einen Druck-E-Modul von 0,25 MPa bis 1,5 MPa und
- eine Rohdichte zwischen 75 kg/m³ bis 350 kg/m³ aufweist.

2. Verfahren nach Anspruch 1, **dadurch gekennzeichnet, dass** der geschlossenzellige Schaum (9a) bahnförmig aufgetragen wird.

3. Verfahren nach Anspruch 1, **dadurch gekennzeichnet, dass** oberhalb und/oder unterhalb des geschlossenzelligen Schaums (9a) eine Klebstoffschicht (8, 10, 32a, 30 32b) angeordnet wird, die insbesondere als 1-Komponenten-Polyurethan-Kleber, 2-Komponenten-Polyurethan-Kleber, als PVAc-Kleber, als Schmelzklebstoff , reaktiver Schmelzklebstoff oder als Etyhlen-Acetat-Copolymer ausgeführt wird.

4. Verfahren nach Anspruch 1, **dadurch gekennzeichnet, dass** der geschlossenzellige Schaum (9a) der schallisolierenden Schicht (9,) aus einem physikalisch vernetzten Polyolefin oder einem Gemisch aus Polyolefinen gebildet wird.

5. Verfahren nach Anspruch 1, **dadurch gekennzeichnet, dass** der zur Herstellung der schallisolierenden Schicht (9) eingesetzte geschlossenzellige Schaum (9a) koronabehandelt ist.

6. Verfahren nach Anspruch 1, **dadurch gekennzeichnet, dass** die schallisolierende Schicht (9, 18), auf eine Oberseite (7a, 19) der Basisplatte (7, 20, 31) und/oder eine Unterseite (21) der Deckplatte (11, 22, 38) aufgetragen wird.

7. Verfahren nach Anspruch 1, **dadurch gekennzeichnet, dass** zwischen der Basisplatte (7, 20, 31) und der Deckplatte (11, 22, 38), in einer Ebene mit der schallisolierenden Schicht (9, 18), abschnittsweise Abstandshalter angeordnet werden.

8. Verfahren nach Anspruch 7, **dadurch gekennzeichnet, dass** die Abstandshalter zumindest teilweise aus Schmelzkleber bestehen.

9. Verfahren nach Anspruch 1, **dadurch gekennzeichnet, dass**
- zur Herstellung der schallisolierenden Schicht (9) ein geschlossenzelliger Schaum (9a) eingesetzt wird, der eine Dicke zwischen 0,1 mm bis 5,0 mm, bevorzugt 0,25 mm bis 3,5 mm, besonders bevorzugt zwischen 0,5 mm bis 2,5 mm, vorteilhaft zwischen 0,75 mm und 2 mm, besonders vorteilhaft zwischen 0.5 mm und 1.0 mm aufweist.

10. Verfahren nach mindestens einem der vorangehenden Ansprüche, mit mindestens den Schritten:
- Bereitstellen des Plattensandwichs (2, 17, 40),
- Auftragen einer Oberflächenbeschichtung (4, 26) auf die Deckplatte (11, 22, 38) des Plattensandwichs (2, 17, 40),
- Aushärten der Oberflächenbeschichtung (4, 26) und
- Herstellen eines nicht lösbaren Verbundes zwischen der Oberflächenbeschichtung (4, 26) und der Deckplatte (11, 22, 38) des Plattensandwichs (2, 17, 40).

11. Plattensandwich, zur Verwendung als Trägerplatte für Paneele (1, 16) bestehend aus mindestens
- einer Basisplatte (7, 20, 31) aus Spanplatte, OSB-Platte oder Faserplatte,
- einer schallisolierenden Schicht (9, 18), wobei ein elastisches Kunststoffmaterial als schallisolierende Schicht (9, 18) angeordnet ist und
- einer Deckplatte (11, 22, 38) aus Spanplatte, OSB-Platte oder Faserplatte, die zum Beschichten mit einer Oberflächenbeschichtung (4, 26) geeignet ist
**dadurch gekennzeichnet, dass**
- das elastische Kunststoffmaterial aus mindestens einem geschlossenzelligen Schaum (9a) besteht,
- der vor dem Einbringen in das Plattensandwich (2, 17, 40) einen Druck-E-Modul von 0,25 MPa bis 1,5 MPa und
- eine Rohdichte zwischen 75 kg/m³ bis 350 kg/m³ aufweist.

12. Plattensandwich nach Anspruch 11 mit einer Oberflächenbeschichtung (4, 26) zur Verwendung als Wand-, Decken- oder Fußbodenpaneel (1, 16).

## Claims

1. A method for producing a board sandwich (2, 17, 40) for use as a wall, ceiling or floor panel (1, 16) having at least the steps:
- providing a base board (7, 20, 31) consisting of a chipboard, OSB panel or fiber board,
- arranging a sound-insulating layer (9, 18) above the base board (7, 20, 31), wherein an elastic plastic material is used to produce the sound-insulating layer (9, 18),
- arranging a cover board (11, 22, 38) consisting of a chipboard, OSB panel or fiber board above the base board (7, 20, 31),
- pressing the sandwich, preferably in a press,
**characterized in that**
- a closed-cell foam (9a) is arranged as an elastic plastic material,
- that, before being introduced into the board sandwich (2, 17, 40), has an elastic modulus of 0.25 MPa to 1.5 MPa and
- has a bulk density between 75 kg/m³ to 350 kg/m³.

2. The method according to claim 1, **characterized in that** the closed-cell foam (9a) is applied in the form of a web.

3. The method according claim 1, **characterized in that** an adhesive layer (8, 10, 32a, 30, 32b) is arranged above and/or below the closed-cell foam (9a) that in particular is designed as a 1-component polyurethane adhesive, 2-component polyurethane adhesive, a PVAC adhesive, a hot melt adhesive, a reactive hot melt adhesive or as an ethylene acetate copolymer.

4. The method according to claim 1, **characterized in that** the closed-cell foam (9a) of the sound insulating layer (9) is formed of a physically cross-linked polyolefin or a mixture of polyolefins.

5. The method according to claim 1, **characterized in that** the closed-cell foam (9a) used to produce the sound-insulating layer (9) is corona-treated.

6. The method according to claim 1, **characterized in that** the sound-insulating layer (9, 18) is applied on a top side (7a, 19) of the base board (7, 20, 31) and/or a bottom side (21) of the cover board (11, 22, 38).

7. The method according to claim 1, **characterized in that** spacers are arranged in sections in a level with the sound-insulating layer (9, 18) between the base board (7, 20, 31) and the cover board (11, 22, 38).

8. The method according to claim 7, **characterized in that** the spacers consist at least partially of hot melt adhesive.

9. The method according to claim 1, **characterized in that**
- to produce the sound-insulating layer (9), a closed-cell foam (9a) is used that has a thickness between 0.1 mm and 5.0 mm, preferably 0.25 mm and 3.5 mm, particularly preferably between 0.5 mm and 2.5 mm, advantageously between 0.75 mm and 2 mm, and particularly advantageously between 0.5 mm and 1.0 mm.

10. The method according to at least one of the preceding claims, comprising at least the steps:
- providing the board sandwich (2, 17, 40),
- applying a surface coating (4, 26) on the cover board (11, 22, 38) of the board sandwich (2, 17, 40),
- hardening the surface coating (4, 26) and
- producing an unreleasable bond between the surface coating (4, 26) and the cover board (11, 22, 38) of the board sandwich (2, 17, 40).

11. A board sandwich for use as a support board for panels (1, 16) consisting of at least
- one base board (7, 20, 31) consisting of a chipboard, OSB panel or fiber board,
- a sound-insulating layer (9, 18), wherein an elastic plastic material is arranged as the sound-insulating layer (9, 18), and
- a cover board (11, 22, 38) consisting of a chipboard, OSB panel, or fiber board that is suitable for being coated with a surface coating (4, 26),
**characterized in that**
- the elastic plastic material consists of at least one closed-cell foam (9a),
- that, before being introduced into the board sandwich (2, 17, 40), has an elastic modulus of 0.25 MPa to 1.5 MPa and
- has a bulk density between 75 kg/m³ to 350 kg/m³.

12. The board sandwich according to claim 11, comprising a surface coating (4, 26) for use as a wall, ceiling or floor panel (1, 16).

## Revendications

1. Procédé destiné à la fabrication d'une plaque sandwich (2, 17, 40) pour l'utilisation en tant que panneau mural, de plafond ou de sol (1, 16) avec au moins les étapes de :
- mise à disposition d'une plaque de base (7, 20, 31) en plaque de particules, plaque OSB ou plaque de fibres,
- agencement d'une couche d'isolation phonique (9, 18) au-dessus de la plaque de base (7, 20, 31), dans lequel un matériau plastique élastique est utilisé pour la fabrication de la couche d'isolation phonique (9, 18),
- agencement d'une plaque de recouvrement (11, 22, 38) en plaque de particules, plaque OSB ou plaque de fibres au-dessus de la plaque de base (7, 20, 31),
- pressage du sandwich, de préférence dans une presse,
**caractérisé en ce que**
- une mousse expansée (9a) est agencée en tant que matériau plastique élastique,
- qui présente avant l'introduction dans la plaque sandwich (2, 17, 40) un module d'élasticité à la compression de 0,25 MPa à 1,5 MPa et
- une densité brute entre 75 kg/m³ et 350 kg/m³.

2. Procédé selon la revendication 1, **caractérisé en ce que** la mousse expansée (9a) est appliquée en forme de bande.

3. Procédé selon la revendication 1, **caractérisé en ce qu'**une couche adhésive (8, 10, 32a, 30, 32b) est agencée au-dessus et/ou en dessous de la mousse expansée (9a), laquelle est notamment réalisée en tant que colle en polyuréthane à 1 composant, colle en polyuréthane à 2 composants, en tant que colle de PVAc, en tant qu'adhésif thermofusible, adhésif thermofusible réactif ou en tant que copolymère d'éthylène-acétate.

4. Procédé selon la revendication 1, **caractérisé en ce que** la mousse expansée (9a) de la couche d'isolation phonique (9) est formée d'une polyoléfine à réticulation physique ou d'un mélange de polyoléfines.

5. Procédé selon la revendication 1, **caractérisé en ce que** la mousse expansée (9a) utilisée pour la fabrication de la couche d'isolation phonique (9) subit un traitement corona.

6. Procédé selon la revendication 1, **caractérisé en ce que** la couche d'isolation phonique (9, 18) est appliquée sur un côté supérieur (7a, 19) de la plaque de base (7, 20, 31) et/ou un côté inférieur (21) de la plaque de recouvrement (11, 22, 38).

7. Procédé selon la revendication 1, **caractérisé en ce que** des écarteurs sont agencés par section entre la plaque de base (7, 20, 31) et la plaque de recouvrement (11, 22, 38) dans un plan avec la couche d'isolation phonique (9, 18).

8. Procédé selon la revendication 7, **caractérisé en ce que** les écarteurs se composent au moins partiellement d'adhésif thermofusible.

9. Procédé selon la revendication 1, **caractérisé en ce que**
- une mousse expansée (9a) qui présente une épaisseur entre 0,1 mm et 5,0 mm, de préférence 0,25 mm et 3,5 mm, de manière particulièrement préférée entre 0,5 mm et 2,5 mm, avantageusement entre 0,75 mm et 2 mm, de manière particulièrement avantageuse entre 0,5 mm et 1,0 mm est utilisée pour la fabrication de la couche d'isolation phonique (9).

10. Procédé selon au moins une des revendications précédentes, avec au moins les étapes de :
- mise à disposition de la plaque sandwich (2, 17, 40),
- application d'un revêtement superficiel (4, 26) sur la plaque de recouvrement (11, 22, 38) de la plaque sandwich (2, 17, 40),
- durcissement du revêtement superficiel (4, 26), et
- fabrication d'un composite non détachable entre le revêtement superficiel (4, 26) et la plaque de recouvrement (11, 22, 38) de la plaque sandwich (2, 17, 40).

11. Plaque sandwich destiné à l'utilisation en tant que plaque de support pour des panneaux (1, 16), constitué d'au moins
- une plaque de base (7, 20, 31) en plaque de particules, plaque OSB ou plaque de fibres,
- une couche d'isolation phonique (9, 18), dans lequel un matériau plastique élastique est agencé en tant que couche d'isolation phonique (9, 18), et
- une plaque de recouvrement (11, 22, 38) en plaque de particules, plaque OSB ou plaque de fibres qui convient au revêtement avec un revêtement superficiel (4, 26),
**caractérisé en ce que**
- le matériau plastique élastique se compose d'au moins une mousse expansée (9a),
- qui présente avant l'introduction dans la plaque sandwich (2, 17, 40) un module d'élasticité à la compression de 0,25 MPa à 1,5 MPa et
- une densité brute entre 75 kg/m³ et 350 kg/m³.

12. Plaque sandwich selon la revendication 11 avec un revêtement superficiel (4, 26) destiné à l'utilisation en tant que panneau mural, de plafond ou de sol (1, 16).
